# EUROPEAN PATENT APPLICATION

(11) **EP 4 280 337 A1**
(43) Date of publication of application: **22.11.2023**
(21) Application number: 21938762.8
(22) Date of filing: 16.07.2021
(51) Int. Cl.: H01M 10/058, H01M 10/04, B65G 35/00, B65G 47/74

(54) **TRANSFER APPARATUS AND METHOD**

(30) Priority: 26.04.2021 CN 202110457958
(71) Applicant: Guangdong Lyric Robot Automation Co., Ltd., Huicheng District Huizhou Guangdong 516000 (CN)
(72) Inventor: HUANG, Sheng, Huizhou, Guangdong 516000 (CN); WEN, Forong, Huizhou, Guangdong 516000 (CN); CAI, Haisheng, Huizhou, Guangdong 516000 (CN)
(74) Representative: Purdylucey Intellectual Property
(86) International application number: PCT/CN2021/106881
(87) International publication number: WO 2022/227295

(57) **Abstract**

A transfer apparatus and method are disclosed. The transfer apparatus includes a base body (10), a limiting assembly (20), a limiting driving assembly (30), a clamp plate assembly (40), and a clamp plate driving assembly (50). The limiting assembly (20) is movably arranged on the base body (10), and configured to be connected to a movable end plate (81) of a cell transfer carrying tool (80). The limiting driving assembly (30) is arranged on the base body (10), drives the limiting assembly (20) to move, and is configured to move the movable end plate (81) along with the limiting assembly (20), to adjust spacing between carrying assemblies (83), such that s cell carried by the carrying assemblies (83) is adaptive to a preheating fixture and an oven. The clamp plate assembly (40) is movably arranged on the base body (10), configured to support the carrying assemblies (83) of the cell transfer carrying tool (80), and positioned at a fixed end plate (82) of the cell transfer carrying tool (80). The clamp plate driving assembly (50) is arranged on the base body (10), drives the clamp plate assembly (40) to move, and is configured to enable the clamp plate assembly (40) to be disengaged from or support the carrying assembly (83). A problem that a cell transfer apparatus is not suitable for transferring cells between a preheating fixture and an oven can be solved.

## Description

### CROSS-REFERENCE TO RELATED APPLICATIONS

This disclosure claims priority to the Chinese patent application No. 2021104579583 entitled "TRANSFER APPARATUS AND METHOD" filed on April 26, 2021, to the China National Intellectual Property Administration, the entire contents of which are incorporated herein by reference.

### TECHNICAL FIELD

The present disclosure relates to the technical field of lithium battery manufacturing, and more particularly, to a transfer apparatus and method.

### BACKGROUND

In the process of preparing lithium battery cells, the production efficiency of the cells can be effectively improved by automating the feeding process of the cells. During drying operation of the cells, the cells need to be transferred to match a preheating fixture, and the cells heated by the preheating fixture need to be transferred to an oven to continue heat preservation and drying. Typical cell transfer apparatus only has a transfer function and is not suitable for transferring cells between the preheating fixture and the oven.

### SUMMARY

The present disclosure provides a transfer apparatus and method, which can solve a problem that a cell transfer apparatus in the existing technology is not suitable for transferring cells between a preheating fixture and an oven.

In a first aspect, the present disclosure provides a transfer apparatus, comprising:
a base body;
a limiting assembly movably arranged on the base body and configured to be connected to a movable end plate of a cell transfer carrying tool;
a clamp plate assembly movably arranged on the base body, configured to support a carrying assembly of the cell transfer carrying tool, and positioned at a fixed end plate of the cell transfer carrying tool;
a clamp plate driving assembly arranged on the base body, driving the clamp plate assembly to move, and configured to enable the clamp plate assembly to be disengaged from or support the carrying assembly; and
a limiting driving assembly arranged on the base body, driving the limiting assembly to move, and configured to move the movable end plate along with the limiting assembly, to adjust spacing between the carrying assemblies, such that a cell carried by the carrying assemblies is adaptive to a preheating fixture and an oven.

In the above implementation process, the transfer apparatus is configured for moving the cell transfer carrying tool, and the transfer apparatus can transfer the cell transfer carrying tool to the preheating fixture and the oven under the action of an external machine. The cell transfer carrying tool is provided with a plurality of position-adjustable and linked carrying assemblies configured to carry the cell, and a head end and a tail end of the plurality of position-adjustable and linked carrying assemblies are connected with the movable end plate and the fixed end plate respectively.

When the transfer apparatus needs to transfer the cell transfer carrying tool, the transfer apparatus needs to be lowered first, so that the limiting assembly is connected with the movable end plate. Then, driven by the clamp plate driving assembly, the clamp plate assembly serves to support a bearing tool of the transfer carrying tool to support the transfer carrying tool, and to position the fixed end plate of the cell transfer carrying tool to ensure that there is no displacement between the plurality of carrying assemblies, so that the cell carried by the carrying assembly can be transferred to the preheating fixture in a correct posture, and corresponding procedures can be carried out. After the preheating fixture finishes operation, the transfer apparatus is lifted up, so that the cell transfer carrying tool is separated from the preheating fixture. The limiting assembly is driven by the limiting driving assembly, so that the movable end plate moves, and the plurality of position-adjustable and linked carrying assemblies move synchronously, so that the posture of the cell is adjusted based on the requirements of the oven, such that the cell is transferred to the oven in a correct posture, and corresponding procedures are carried out, and the transfer apparatus completes the transfer operation.

In an optional embodiment, the limiting assembly comprises a limiting carrying plate and a clamping block, the limiting carrying plate is movably arranged on a bottom surface of the base body, and the limiting driving assembly drives the limiting carrying plate to move; and
the clamping block is arranged on the limiting carrying plate and is configured to be clamped with the movable end plate.

In the above implementation process, the limiting assembly has a simple structure and is convenient to manufacture. The limiting driving assembly drives the limiting carrying plate to move, such that the clamping block can correspond to the movable end plate of the cell transfer carrying tool, and the clamping block is clamped on the movable end plate by lowering the whole transfer apparatus to complete the connection with the movable end plate. When it is necessary to adapt to a size of the preheating fixture or the oven, the clamping block is driven by the limiting driving assembly, thus driving the movable end plate to move.

It should be noted that the clamping block has a U-shaped groove, so the clamping block is convenient to be clamped on a top portion of the movable end plate. Meanwhile, two clamping blocks are provided, and the two clamping blocks are arranged at opposite ends of the limiting carrying plate at interval to clamp and push the movable end plate together to ensure that the movable end plate moves smoothly.

In an optional embodiment, the limiting driving assembly comprises a servo motor and a lead screw, the servo motor is arranged on the bottom surface of the base body, and the servo motor is connected with the lead screw;
the limiting carrying plate is formed with a supporting plate, the supporting plate is provided with a lead screw nut, and the lead screw is matched with the lead screw nut; and
the limiting carrying plate is configured with a slider, the bottom surface of the base body is provided with a sliding rail, and the slider is in sliding fit with the sliding rail.

In the above implementation process, the limiting driving assembly adopts a linear structure of the lead screw, and a rotating speed and steering of the lead screw can be effectively controlled by the servo motor, so as to accurately control a movement direction and accuracy of the limiting carrying plate, and ensure that the clamping block is accurately clamped on the movable end plate and accurately pushes the movable end plate to move to a target position. It should be noted that the limiting driving assembly, the base body and the limiting carrying plate are connected through the lead screw, the slider and the sliding rail, which can effectively ensure the integrity and compactness of the three, ensure that the limiting driving assembly drives the limiting carrying plate to move smoothly and stably, and also ensure that the noise of the limiting carrying plate when moving is controlled. It should be noted that two sliding rails are provided, the two sliding rails are arranged on both sides of the lead screw, and the limiting carrying plate is provided with two slider mounting bases. The sliders are respectively arranged on the slider mounting bases, so that the stability of the limiting carrying plate when sliding relative to the base body can be effectively improved by the two sliders. One of the purposes of setting the slider mounting bases is to increase a distance between the limiting carrying plate and the base body to avoid interference between the two. Meanwhile, because the limiting carrying plate is provided with a plurality of structures, such as the clamping block and the supporting plate, it is necessary to replace the slider mounting base only in later maintenance, thus controlling the maintenance cost.

In an optional embodiment, the transfer apparatus further comprises a pin pushing assembly and a pushing driving assembly; and
the pin pushing assembly and the pushing driving assembly are arranged on the limiting carrying plate, the pushing driving assembly is configured to drive the pin pushing assembly to move, and the pin pushing assembly is configured to push a limiting pin on the movable end plate.

In the above implementation process, the movable end plate of the cell transfer carrying tool is provided with the limiting pin, which can move on the movable end plate, and the function of the limiting pin is to lock the movable end plate to the cell transfer carrying tool, so as to fix the movable end plate and ensure the relative stillness between the carrying assemblies. For example, after the cell transfer carrying tool is separated from the preheating fixture, the limiting assembly tool is operated to adjust a posture of the cell based on the requirements of the oven. Then the pushing driving assembly tool is operated to make the pin pushing assembly push the limiting pin, and the limiting pin locks and fixes the posture of the cell, so that the cell enters the oven in a fixed and correct posture.

It should be noted that a moving direction of the pin pushing assembly and a moving direction of the limiting assembly are vertical to each other.

In an optional embodiment, the pin pushing assembly comprises a carrying block and a pushing block, and the limiting carrying plate is configured with a track;
the carrying block is slidably arranged on the track, and the pushing block is arranged on the carrying block; and
the carrying block is provided with a pushing rack, the pushing driving assembly comprises a pushing motor and a pushing gear, the pushing motor is connected with the pushing gear, and the pushing gear is engaged with the pushing rack and is configured to drive the carrying block to slide along the track.

In the above implementation process, the pushing motor is fixed on the limiting carrying plate, and the pushing motor controls steering and a rotating speed of the pushing gear, so as to control the carrying block to reciprocate along the track, and the limiting pin is toggled by the pushing block to complete the locking and unlocking of the limiting pin. It should be noted that an end portion of the pushing block is formed with a groove which is clamped with the limiting pin. Through the groove, the pushing of the pushing block to the limiting pin can be ensured to be in place, so as to avoid a situation that a safety accident occurs because the pushing operation is not realized due to dislocation. It should be noted that two pin pushing assemblies and two pushing driving assemblies are provided. The two pin pushing assemblies and the two pushing driving assemblies are located on both sides of the track to push the limiting pins on both sides of the movable end plate respectively. It should be noted that each pin pushing assembly is configured with one stroke sensor, which is arranged on the limiting carrying plate and configured to sense a moving stroke of the pin pushing assembly and connect the pushing motor, so as to limit a displacement stroke of the pin pushing assembly and avoid the damage of the limiting pin caused by excessive movement.

In an optional embodiment, the clamp plate assembly comprises a mounting plate and a bearing rod, the mounting plate is slidably arranged on the base body, and the bearing rod is connected with the mounting plate;
the bearing rod is configured to be embedded in a supporting groove of the carrying assembly, a positioning slot is formed at an end portion of the bearing rod, and the positioning slot is configured to be clamped with a limiting block of the fixed end plate; and
the clamp plate driving assembly drives the mounting plate to move.

In the above implementation process, the clamp plate driving assembly drives the mounting plate to move, so that the bearing rod can be embedded into or separated from the supporting groove of the carrying assembly to support the carrying assembly or cancel supporting the carrying assembly. When the bearing rod is embedded in the supporting groove in place, the supporting groove may slide along the bearing rod, and the positioning slot can be clamped with the limiting block of the fixed end plate, so that the bearing rod and the fixed end are fixed with each other, and the movement of the carrying assembly is controlled by the limiting assembly, thus ensuring that the transfer apparatus can effectively control the distance between all carrying assemblies in the cell transfer carrying tool.

It should be noted that two clamp plate assemblies and two clamp plate driving assemblies are provided, and are respectively located at both sides of the base body, and are configured to support both sides of the carrying assembly and position the fixed end plate.

In an optional embodiment, the clamp plate driving assembly comprises a clamp plate motor and a clamp plate gear, the clamp plate motor is fixed to the base body, and the clamp plate gear is connected with the clamp plate motor; and
the mounting plate is provided with a clamp plate rack and a clamp plate sliding rail structure, the mounting plate is mounted on the base body through the clamp plate sliding rail structure, and the clamp plate gear is engaged with the clamp plate rack.

In the above implementation process, the clamp plate motor works to control steering and a rotating speed of the clamp plate gear, so as to control a moving direction and moving accuracy of the mounting plate and ensure supporting efficiency of the bearing rod to the carrying assembly. It should be noted that a plurality of clamp plate sliding rail structures may be provided, and the plurality of clamp plate sliding rail structures can ensure smooth movement of the mounting plate relative to the base body. It should be noted that the mounting plate may be L-shaped, one part of which is arranged parallel to the base body to connect with the clamp plate driving assembly, and the other part of which is arranged vertical to the base body to connect with the bearing rod. Meanwhile, the mounting plate comprises a hollow part formed at a part connecting the bearing rod, an avoidance slot is formed at an edge of the base body, and the avoidance slot is matched with the hollow part, so that the mounting plate can be smoothly displaced without interfering with the base body.

In an optional embodiment, the transfer apparatus further comprises an in-place sensor; and the in-place sensor is arranged on an end portion of the base body, and the in-place sensor is configured to sense the cell transfer carrying tool.

In the above implementation process, the in-place sensor senses the cell transfer carrying tool, so that the limiting assembly can accurately correspond to the movable end plate and ensure that the limiting assembly can accurately cooperate with the movable end plate.

It should be noted that in the limiting assembly, a position sensor is arranged at a position of the clamping block, which is configured to sense a clamping state of the clamping block and the movable end plate, so as to ensure that the clamping block and the movable end plate are connected in place.

In a second aspect, the present disclosure provides a transfer method based on the transfer apparatus of the aforementioned embodiments, comprising:
a preparation step: moving the transfer apparatus above the preheating fixture and driving the limiting assembly to move through the limiting driving assembly to correspond to the movable end plate of the cell transfer carrying tool;
a limiting step: lowering the transfer apparatus such that the limiting assembly is connected with the movable end plate;
a supporting and positioning step: driving the clamp plate assembly to support the carrying assembly of the cell transfer carrying tool and to be positioned on the fixed end plate of the cell transfer carrying tool through the clamp plate driving assembly;
a separation step: lifting the transfer apparatus such that the cell transfer carrying tool is separated from the preheating fixture;
an adjusting step: driving the limiting assembly to push the movable end plate to move towards the fixed end plate through the limiting driving assembly, such that a posture of the carrying assembly corresponds to the oven; and
a transfer step: transferring the transfer apparatus to transfer the cell transfer carrying tool to the oven.

In an optional embodiment, the transfer apparatus further comprises an in-place sensor;
the in-place sensor is arranged on an end portion of the base body, and the in-place sensor is configured to sense the fixed end plate of the cell transfer carrying tool; and
in the limiting step, the fixed end plate of the cell transfer carrying tool is sensed through the in-place sensor to determine position information of the cell transfer carrying tool, and the limiting driving assembly controls a position of the limiting assembly to be connected with the movable end plate based on the position information.

### BRIEF DESCRIPTION OF THE DRAWINGS

In order to more clearly illustrate the technical solutions of the embodiments of the present disclosure, the drawings that are required to describe the embodiments will be briefly introduced below. It should be understood that the drawings below only illustrate some embodiments of the present disclosure, and should not be regarded as limiting the scope. Those of ordinary skills in the art can obtain other related drawings according to these drawings without paying creative work.
FIG. 1 to FIG. 3 are perspective views of a transfer apparatus according to an embodiment of the present disclosure from three perspectives;
FIG. 4 is a perspective view of a cell transfer carrying tool matched with the transfer apparatus according to an embodiment of the present disclosure;
FIG. 5 and FIG. 6 are perspective views of a limiting assembly according to an embodiment of the present disclosure from two perspectives;
FIG. 7 is a schematic diagram of a movable end plate of the cell transfer carrying tool;
FIG. 8 is a perspective view of a clamp plate assembly according to an embodiment of the present disclosure; and
FIG. 9 is a flow chart of a transfer method according to an embodiment of the present disclosure.

Reference numerals: 10 - base body; 11 - sliding rail; and 12 - in-place sensor;
20 - limiting assembly; 21 - limiting carrying plate; 22 - clamping block; 23 - position sensor; 24 - supporting plate; 25 - slider mounting base; and 26 - track;
30 - limiting driving assembly; 31 - servo motor; and 32 - lead screw;
40 - clamp plate assembly; 41 - mounting plate; 42 - bearing rod; 43 - positioning slot; 44 - clamp plate rack; and 45 - clamp plate sliding rail structure;
50 - clamp plate driving assembly; 51 - clamp plate motor; and 52 - clamp plate gear;
60 - pin pushing assembly; 61 - carrying block; 62 - pushing block; 63 - pushing rack; and 64 - stroke sensor;
70 - pushing driving assembly; 71 - pushing motor; and 72 - pushing gear; and
80 - cell transfer carrying tool; 81 - movable end plate; 82 - fixed end plate; 83 - carrying assembly; 84 - limiting pin; 85 - locking block; 86 - supporting groove; and 87 - limiting block.

### DETAILED DESCRIPTION

In order to make the objects, the technical solutions and the advantages of the embodiments of the present disclosure clearer, the technical solutions in the embodiments of the present disclosure will be clearly and completely described below with reference to the drawings in the embodiments of the present disclosure. Apparently, the described embodiments are merely some embodiments of the present disclosure, rather than all of the embodiments. Components of the embodiments of the present disclosure, which are generally described and illustrated in the drawings herein, may be arranged and designed in various different configurations.

Therefore, the following detailed description of the embodiments of the present disclosure provided in the drawings is not intended to limit the scope of the present disclosure claimed, but merely represents selected embodiments of the present disclosure. All of the other embodiments that those of ordinary skills in the art obtain on the basis of the embodiments of the present disclosure without paying creative work fall within the protection scope of the present disclosure.

It should be noted that similar reference numerals and letters indicate similar items in the following drawings, so once one item is defined in one drawing, it does not need to be further defined and explained in the following drawings.

In the description of the present disclosure, it should be understood that the orientation or positional relationship indicated by the terms "center", "up", "down", "left", "right", "vertical", "horizontal", "inner", "outer", and the like is based on the orientation or positional relationship shown in the drawings, or the orientation or positional relationship that the product of the present disclosure is commonly placed in use, or the orientation or positional relationship commonly understood by those of ordinary skills in the art, it is only for the convenience of describing the present disclosure and simplifying the description, and it is not to indicate or imply that the indicated device or element must have a specific orientation, be constructed and operated in a specific orientation. Therefore, the terms should not be construed as limiting the present disclosure.

In the description of the present disclosure, it should be noted that unless otherwise specified and limited, the terms "setting", "mounting" "connected" and "connection" should be understood broadly, for example, the connection may be fixed connection, and may also be detachable connection or integral connection; may be direct connection, may also be indirect connection through an intermediate medium, and may also be internal communication between two elements. The specific meaning of the above terms in the present disclosure may be understood in a specific case by those of ordinary skills in the art.

It should be noted that, in case of no conflict, the embodiments in the present disclosure and the features in the embodiments may be combined with each other.

The technical solutions in the present disclosure will be further described hereinafter in detail with reference to the drawings.

An embodiment of the present disclosure provides a transfer apparatus, which can solve a problem that a cell transfer apparatus in the existing technology is not suitable for transferring cells between a preheating fixture and an oven.

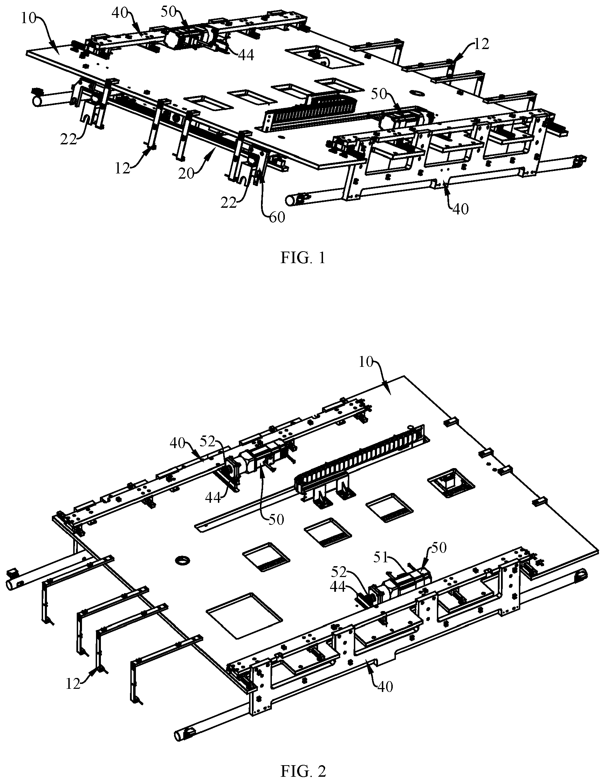

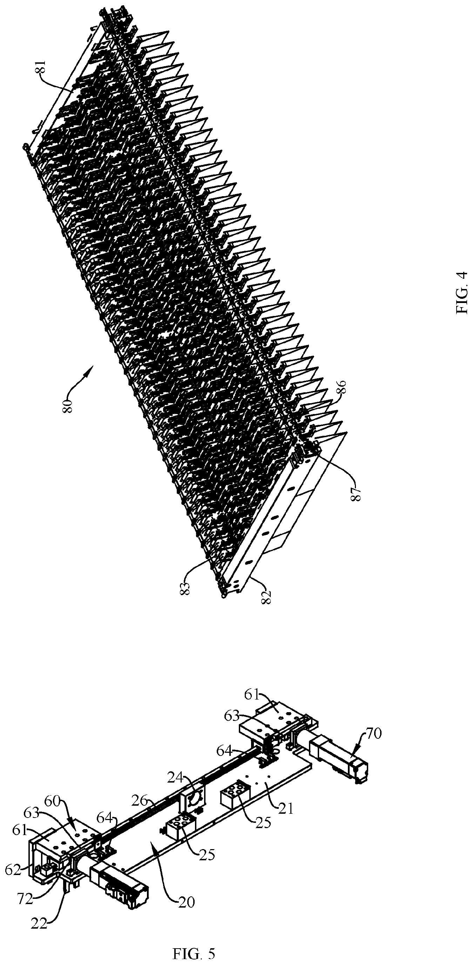

Please refer to FIG. 1 to FIG. 4, wherein FIG. 1 to FIG. 3 are perspective views of the transfer apparatus according to an embodiment of the present disclosure from three perspectives, and FIG. 4 is a perspective view of a cell transfer carrying tool 80 matched with the transfer apparatus according to an embodiment of the present disclosure.

The transfer apparatus comprises a base body 10, a limiting assembly 20, a limiting driving assembly 30, a clamp plate assembly 40 and a clamp plate driving assembly 50.

The limiting assembly 20 is movably arranged on the base body 10 and configured to be connected to a movable end plate 81 of the cell transfer carrying tool 80. The limiting driving assembly 30 is arranged on the base body 10 and drives the limiting assembly 20 to move, and is configured to move the movable end plate 81 along with the limiting assembly 20, to adjust spacing between carrying assemblies 83, such that a cell carried by the carrying assemblies 83 is adaptive to a preheating fixture and an oven.

The clamp plate assembly 40 is movably arranged on the base body 10 and configured to support the carrying assembly 83 of the cell transfer carrying tool 80, and positioned at a fixed end plate 82 of the cell transfer carrying tool 80. The clamp plate driving assembly 50 is arranged on the base body 10 and drives the clamp plate assembly 40 to move, and is configured to enable the clamp plate assembly 40 to be disengaged from or support the carrying assembly 83.

It should be noted that the base body 10 according to an embodiment of the present disclosure may be a plate like structure.

In the above implementation process, the transfer apparatus is configured for moving the cell transfer carrying tool 80, and the transfer apparatus can transfer the cell transfer carrying tool 80 to the preheating fixture and the oven under the action of an external machine.

Refer to FIG. 4, which illustrates a cell transfer carrying tool 80. The cell transfer carrying tool 80 is provided with a plurality of position-adjustable and linked carrying assemblies 83 configured to carry the cell, and a head end and a tail end of the plurality of position-adjustable and linked carrying assemblies 83 are connected with the movable end plate 81 and the fixed end plate 82 respectively.

When the transfer apparatus needs to transfer the cell transfer carrying tool 80, the transfer apparatus needs to be lowered first, so that the limiting assembly 20 is connected with the movable end plate 81. Then, driven by the clamp plate driving assembly 50, the clamp plate assembly 40 serves to support a bearing tool of the transfer carrying tool to support the transfer carrying tool, and to position the fixed end plate 82 of the cell transfer carrying tool 80 to ensure that there is no displacement between the plurality of carrying assemblies 83, so that the cell carried by the carrying assembly 83 can be transferred to the preheating fixture in a correct posture, and corresponding procedures can be carried out.

After the preheating fixture finishes operation, the transfer apparatus is lifted up, so that the cell transfer carrying tool 80 is separated from the preheating fixture. The limiting assembly 20 is driven by the limiting driving assembly 30, so that the movable end plate 81 moves, and the carrying assemblies 83 of the cell transfer carrying tool 80 move synchronously, so that the posture of the cell is adjusted based on the requirements of the oven, such that the cell is transferred to the oven in a correct posture (for example, all the cells are folded together to adapt to a size of the oven), corresponding procedures are carried out, and the transfer apparatus completes the transfer operation.

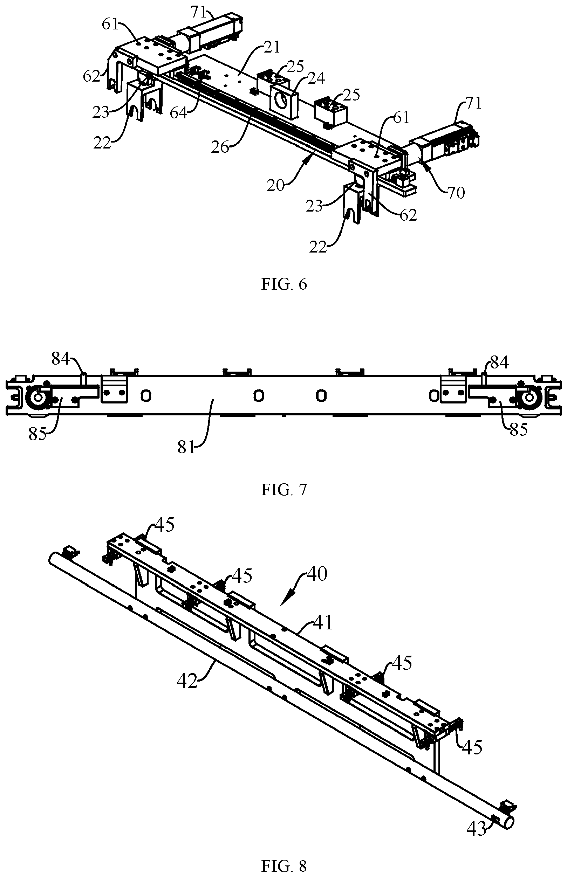

With reference to FIG. 5 and FIG. 6, FIG. 5 and FIG. 6 are perspective views of the limiting assembly 20 according to an embodiment of the present disclosure from two perspectives.

The limiting assembly 20 comprises a limiting carrying plate 21 and a clamping block 22, the limiting carrying plate 21 is movably arranged on a bottom surface of the base body 10, and the limiting driving assembly 30 drives the limiting carrying plate 21 to move. The clamping block 22 is arranged on the limiting carrying plate 21 and is configured to be clamped with the movable end plate 81.

In the above implementation process, the limiting assembly 20 has a simple structure and is convenient to manufacture. The limiting driving assembly 30 drives the limiting carrying plate 21 to move, such that the clamping block 22 can correspond to the movable end plate 81 of the cell transfer carrying tool 80, and the clamping block 22 is clamped on the movable end plate 81 by lowering the whole transfer apparatus to complete the connection with the movable end plate 81. When it is necessary to adapt to a size of the preheating fixture or the oven, the clamping block 22 is driven by the limiting driving assembly 30, thus driving the movable end plate 81 to move.

It should be noted that, the clamping block 22 has a U-shaped groove, so the clamping block is convenient to be clamped on a top portion of the movable end plate 81. Meanwhile, two clamping blocks 22 are provided, and the two clamping blocks 22 are arranged at opposite ends of the limiting carrying plate 21 at interval to clamp and push the movable end plate 81 together to ensure that the movable end plate 81 moves smoothly.

It should be noted that in the limiting assembly 20, a position sensor 23 is arranged at a position of the clamping block 22, which is configured to sense a clamping state of the clamping block 22 and the movable end plate 81, so as to ensure that the clamping block 22 is clamped with the movable end plate 81 in place.

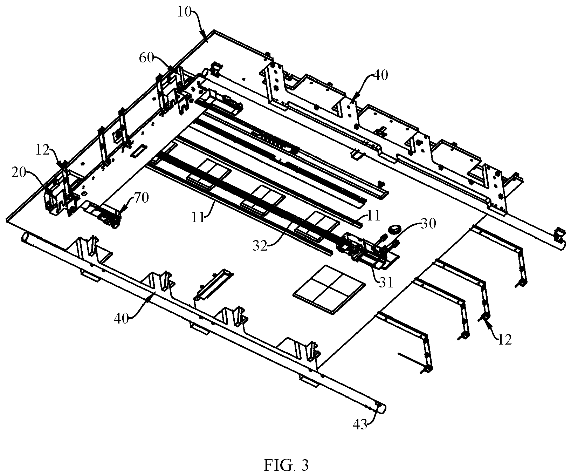

In the present disclosure, referring to FIG. 3, FIG. 5 and FIG. 6, the limiting driving assembly 30 comprises a servo motor 31 and a lead screw 32, the servo motor 31 is arranged on the bottom surface of the base body 10, and the servo motor 31 is connected with the lead screw 32.

The limiting carrying plate 21 is formed with a supporting plate 24, the supporting plate 24 is provided with a lead screw 32 nut, and the lead screw 32 is matched with the lead screw 32 nut. The limiting carrying plate 21 is configured with a slider, the bottom surface of the base body 10 is provided with a sliding rail 11, and the slider is in sliding fit with the sliding rail 11.

In the above implementation process, the limiting driving assembly 30 adopts a linear structure of the lead screw 32, and a rotating speed and steering of the lead screw 32 can be effectively controlled by the servo motor 31, so as to accurately control a movement direction and accuracy of the limiting carrying plate 21, and ensure that the clamping block 22 is accurately clamped on the movable end plate 81 and accurately pushes the movable end plate 81 to move to a target position. It should be noted that the limiting driving assembly 30, the base body 10 and the limiting carrying plate 21 are connected through the lead screw 32, the slider and the sliding rail 11, which can effectively ensure the integrity and compactness of the three, ensure that the limiting driving assembly 30 drives the limiting carrying plate 21 to move smoothly and stably, and also ensure that the noise of the limiting carrying plate 21 when moving is controlled. It should be noted that two sliding rails 11 are provided, the two sliding rails 11 are arranged on both sides of the lead screw 32, and the limiting carrying plate 21 is provided with two slider mounting bases 25. The sliders are respectively arranged on the slider mounting bases 25, so that the stability of the limiting carrying plate 21 when sliding relative to the base body 10 can be effectively improved by the two sliders. One of the purposes of setting the slider mounting bases 25 is to increase a distance between the limiting carrying plate 21 and the base body 10 to avoid interference between the two. Meanwhile, because the limiting carrying plate 21 is provided with a plurality of structures, such as the clamping block 22 and the supporting plate 24, it is only necessary to replace the slider mounting base 25 in later maintenance, thus controlling the maintenance cost.

It should be noted that in other specific embodiments, the limiting driving assembly 30 may also be other devices capable of outputting linear motion, for example, a telescopic mechanism like air cylinder is used to output linear motion to the limiting carrying plate 21.

As shown in FIG. 5 and FIG. 6, the transfer apparatus further comprises a pin pushing assembly 60 and a pushing driving assembly 70.

The pin pushing assembly 60 and the pushing driving assembly 70 are arranged on the limiting carrying plate 21, the pushing driving assembly 70 is configured to drive the pin pushing assembly 60 to move, and the pin pushing assembly 60 is configured to push a limiting pin 84 on the movable end plate 81.

For clear explanation, please refer to FIG. 7, which is a schematic diagram of the movable end plate 81.

The movable end plate 81 of the cell transfer carrying tool 80 is provided with the limiting pin 84. The limiting pin 84 can move on the movable end plate 81, and the function of the limiting pin 84 is to lock the movable end plate 81 to the cell transfer carrying tool 80, so as to fix the movable end plate 81 and ensure the relative stillness between the carrying assemblies 83. For example, after the cell transfer carrying tool 80 is separated from the preheating fixture, the limiting assembly 20 operates to adjust a posture of the cell based on the requirements of the oven. Then the pushing driving assembly 70 operates to make the pin pushing assembly 60 push the limiting pin 84, and the limiting pin 84 locks and fixes the posture of the cell, so that the cell enters the oven in a fixed and correct posture. It should be noted that the locking is explained. In one case, the limiting pin 84 is provided with a locking block 85, and the locking block 85 is rotatably connected to the movable end plate 81. The pin pushing assembly 60 pushes the limiting pin 84 to rotate the locking block 85, so that the locking block 85 can be inserted into a groove in the cell transfer carrying tool 80, and the movable end plate 81 is fixed relative to the groove of the cell transfer carrying tool 80, thereby locking the movable end plate 81 so as not to be displaced, and the plurality of carrying assemblies 83 of the cell transfer carrying tool 80 remain stationary.

It should be noted that a moving direction of the pin pushing assembly 60 and a moving direction of the limiting assembly 20 are vertical to each other.

In the present disclosure, the pin pushing assembly 60 comprises a carrying block 61 and a pushing block 62, and the limiting carrying plate 21 is configured with a track 26.

The carrying block 61 is slidably arranged on the track 26, and the pushing block 62 is arranged on the carrying block 61. The carrying block 61 is provided with a pushing rack 63, the pushing driving assembly 70 comprises a pushing motor 71 and a pushing gear 72, the pushing motor 71 is connected with the pushing gear 72, and the pushing gear 72 is engaged with the pushing rack 63 and is configured to drive the carrying block 61 to slide along the track 26.

In the above implementation process, the pushing motor 71 is fixed on the limiting carrying plate 21, and the pushing motor 71 controls steering and a rotating speed of the pushing gear 72, so as to control the carrying block 61 to reciprocate along the track 26, and the limiting pin 84 is toggled by the pushing block 62 to complete the locking and unlocking of the limiting pin 84. It should be noted that an end portion of the pushing block 62 is formed with a groove which is clamped with the limiting pin 84. Through the groove, the pushing of the pushing block 62 to the limiting pin 84 can be ensured to be in place, so as to avoid a situation that a safety accident occurs because the pushing operation is not realized due to dislocation. It should be noted that two pin pushing assemblies 60 and two pushing driving assemblies 70 are provided. The two pin pushing assemblies 60 and the two pushing driving assemblies 70 are located on both sides of the track 26 to push the limiting pins 84 on both sides of the movable end plate 81 respectively. It should be noted that each pin pushing assembly 60 is configured with one stroke sensor 64. The stroke sensor 64 is arranged on the limiting carrying plate 21 and configured to sense a moving stroke of the pin pushing assembly 60 and connect the pushing motor 71, so as to limit a displacement stroke of the pin pushing assembly 60 and avoid the damage of the limiting pin 84 caused by excessive movement.

Referring to FIG. 8, FIG. 8 is a perspective view of the clamp plate assembly 40 according to an embodiment of the present disclosure.

The clamp plate assembly 40 comprises a mounting plate 41 and a bearing rod 42, the mounting plate 41 is slidably arranged on the base body 10, and the bearing rod 42 is connected with the mounting plate 41.

The bearing rod 42 is configured to be embedded in a supporting groove 86 (marked in FIG. 4) of the carrying assembly 83, a positioning slot 43 (shown in FIG. 3) is formed at an end portion of the bearing rod 42, and the positioning slot 43 is configured to be clamped with a limiting block 87 of the fixed end plate 82. The clamp plate driving assembly 50 drives the mounting plate 41 to move.

In the above implementation process, the clamp plate driving assembly 50 drives the mounting plate 41 to move, so that the bearing rod 42 can be embedded into or separated from the supporting groove 86 of the carrying assembly 83 to support the carrying assembly 83 or cancel supporting the carrying assembly 83. When the bearing rod 42 is embedded in the supporting groove 86 in place, the supporting groove 86 may slide along the bearing rod 42, and the positioning slot 43 can be clamped with the limiting block 87 of the fixed end plate 82, so that the bearing rod 42 and the fixed end are fixed with each other, and the movement of the carrying assembly 83 is controlled by the limiting assembly 20, thus ensuring that the transfer apparatus can effectively control the distance between all carrying assemblies 83 in the cell transfer carrying tool 80.

It should be noted that two clamp plate assemblies 40 and two clamp plate driving assemblies 50 are provided, and are respectively located at both sides of the base body 10, and are configured to support both sides of the carrying assembly 83 and position the fixed end plate 82.

Please with reference to FIG. 1 and FIG. 2, the clamp plate driving assembly 50 comprises a clamp plate motor 51 and a clamp plate gear 52, the clamp plate motor 51 is fixed to the base body 10, and the clamp plate gear 52 is connected with the clamp plate motor 51.

The mounting plate 41 is provided with a clamp plate rack 44 and a clamp plate sliding rail structure 45, the mounting plate 41 is mounted on the base body 10 through the clamp plate sliding rail structure 45, and the clamp plate gear 52 is engaged with the clamp plate rack 44.

In the above implementation process, the clamp plate motor 51 works to control steering and a rotating speed of the clamp plate gear 52, so as to control a moving direction and moving accuracy of the mounting plate 41 and ensure supporting efficiency of the bearing rod 42 to the carrying assembly 83. It should be noted that a plurality of clamp plate sliding rail structures 45 may be provided, and the plurality of clamp plate sliding rail structures 45 can ensure smooth movement of the mounting plate 41 relative to the base body 10. It should be noted that the mounting plate 41 may be L-shaped, one part of which is arranged parallel to the base body 10 to connect with the clamp plate driving assembly 50, and the other part of which is arranged vertical to the base body 10 to connect with the bearing rod 42. Meanwhile, the mounting plate 41 comprises a hollow part formed at a part connecting the bearing rod 42, an avoidance slot is formed at an edge of the base body 10, and the avoidance slot is matched with the hollow part, so that the mounting plate 41 can be smoothly displaced without interfering with the base body 10.

It should be noted that in other specific embodiments, the clamp plate driving assembly 50 may also be other devices capable of outputting linear motion, such as an air cylinder, and a telescopic rod of the air cylinder is connected with the mounting plate 41. It should be noted that a moving direction of the mounting plate 41 and a moving direction of the limiting assembly 20 are vertical to each other.

In the present disclosure, as shown in FIG. 2 and FIG. 3, the transfer apparatus further comprises an in-place sensor 12. The in-place sensor 12 is arranged on an end portion of the base body 10, and the in-place sensor 12 is configured to sense the fixed end plate of the cell transfer carrying tool 80.

In the above implementation process, the in-place sensor 12 senses the cell transfer carrying tool 80, so that the limiting assembly 20 can accurately correspond to the movable end plate 81 and ensure that the limiting assembly 20 can accurately cooperate with the movable end plate 81. It should be noted that when the transfer apparatus descends, the in-place sensor 12 can sense whether the cell transfer carrying tool 80 is below the transfer apparatus, and meanwhile, during the transfer process, the in-place sensor 12 senses whether the cell transfer carrying tool 80 falls off, thus ensuring the safety of the cell transfer carrying tool 80.

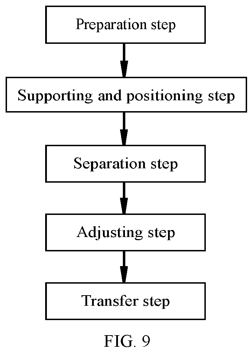

Referring to FIG. 9, FIG. 9 is a flow chart of a transfer method according to an embodiment of the present disclosure.

It should be noted that an embodiment of the present disclosure further provides a transfer method based on the aforementioned transfer apparatus, wherein the method comprise:
a preparation step: moving the transfer apparatus above the preheating fixture and driving the limiting assembly 20 to move through the limiting driving assembly 30 to correspond to the movable end plate 81 of the cell transfer carrying tool 80;
a limiting step: lowering the transfer apparatus such that the limiting assembly 20 is connected with the movable end plate 81;
a supporting and positioning step: driving the clamp plate assembly 40 to support the carrying assembly 83 of the cell transfer carrying tool 80 and to be positioned on the fixed end plate 82 of the cell transfer carrying tool 80 through the clamp plate driving assembly 50;
a separation step: lifting the transfer apparatus such that the cell transfer carrying tool 80 is separated from the preheating fixture;
an adjusting step: driving the limiting assembly 20 to push the movable end plate 81 to move towards the fixed end plate 82 through the limiting driving assembly 30, such that a posture of the carrying assembly 83 corresponds to the oven; and
a transfer step: transferring the transfer apparatus to transfer the cell transfer carrying tool 80 to the oven.

When the in-place sensor 12 is provided, in the limiting step, the fixed end plate 82 of the cell transfer carrying tool 80 is sensed through the in-place sensor 12 to determine position information of the cell transfer carrying tool 80, and the limiting driving assembly 30 controls a position of the limiting assembly 20 to be connected with the movable end plate 81 based on the position information.

It should be note that when the pin pushing assembly 60 is provided, in the adjusting step, the limiting driving assembly 30 drives the limiting assembly 20 to push the movable end plate 81 to move to the fixed end plate 82, and then the pin pushing assembly 60 acts on the movable end plate 81, so that the limiting pin 84 of the movable end plate 81 locks to ensure that the movable end plate 81 does not displace.

The above are merely preferred embodiments of the present disclosure and are not intended to limit the present disclosure. For those of ordinary skills in the art, the present disclosure may have various modifications and changes. Any modification, equivalent replacement, and improvement made without departing from the gist and principle of the present disclosure shall fall within the protection scope of the present disclosure.

## Claims

1. A transfer apparatus, comprising:
a base body;
a limiting assembly movably arranged on the base body and configured to be connected to a movable end plate of a cell transfer carrying tool;
a clamp plate assembly movably arranged on the base body, configured to support a carrying assembly of the cell transfer carrying tool, and positioned at a fixed end plate of the cell transfer carrying tool;
a clamp plate driving assembly arranged on the base body, driving the clamp plate assembly to move, and configured to enable the clamp plate assembly to be disengaged from or support the carrying assembly; and
a limiting driving assembly arranged on the base body, driving the limiting assembly to move, and configured to move the movable end plate along with the limiting assembly, to adjust spacing between the carrying assemblies, such that a cell carried by the carrying assemblies is adaptive to a preheating fixture and an oven.

2. The transfer apparatus according to claim 1, wherein:
the limiting assembly comprises a limiting carrying plate and a clamping block, the limiting carrying plate is movably arranged on a bottom surface of the base body, and the limiting driving assembly drives the limiting carrying plate to move; and
the clamping block is arranged on the limiting carrying plate and is configured to be clamped with the movable end plate.

3. The transfer apparatus according to claim 2, wherein:
the limiting driving assembly comprises a servo motor and a lead screw, the servo motor is arranged on the bottom surface of the base body, and the servo motor is connected with the lead screw;
the limiting carrying plate is formed with a supporting plate, the supporting plate is provided with a lead screw nut, and the lead screw is matched with the lead screw nut; and
the limiting carrying plate is configured with a slider, the bottom surface of the base body is provided with a sliding rail, and the slider is in sliding fit with the sliding rail.

4. The transfer apparatus according to claim 2, wherein:
the transfer apparatus further comprises a pin pushing assembly and a pushing driving assembly; and
the pin pushing assembly and the pushing driving assembly are arranged on the limiting carrying plate, the pushing driving assembly is configured to drive the pin pushing assembly to move, and the pin pushing assembly is configured to push a limiting pin on the movable end plate.

5. The transfer apparatus according to claim 4, wherein:
the pin pushing assembly comprises a carrying block and a pushing block, and the limiting carrying plate is configured with a track;
the carrying block is slidably arranged on the track, and the pushing block is arranged on the carrying block; and
the carrying block is provided with a pushing rack, the pushing driving assembly comprises a pushing motor and a pushing gear, the pushing motor is connected with the pushing gear, and the pushing gear is engaged with the pushing rack and is configured to drive the carrying block to slide along the track.

6. The transfer apparatus according to claim 1, wherein:
the clamp plate assembly comprises a mounting plate and a bearing rod, the mounting plate is slidably arranged on the base body, and the bearing rod is connected with the mounting plate;
the bearing rod is configured to be embedded in a supporting groove of the carrying assembly, a positioning slot is formed at an end portion of the bearing rod, and the positioning slot is configured to be clamped with a limiting block of the fixed end plate; and
the clamp plate driving assembly drives the mounting plate to move.

7. The transfer apparatus according to claim 6, wherein:
the clamp plate driving assembly comprises a clamp plate motor and a clamp plate gear, the clamp plate motor is fixed to the base body, and the clamp plate gear is connected with the clamp plate motor; and
the mounting plate is provided with a clamp plate rack and a clamp plate sliding rail structure, the mounting plate is mounted on the base body through the clamp plate sliding rail structure, and the clamp plate gear is engaged with the clamp plate rack.

8. The transfer apparatus according to any one of claims 1 to 7, wherein:
the transfer apparatus further comprises an in-place sensor; and
the in-place sensor is arranged on an end portion of the base body, and the in-place sensor is configured to sense the cell transfer carrying tool.

9. A transfer method based on the transfer apparatus according to claim 1, comprising:
a preparation step: moving the transfer apparatus above the preheating fixture and driving the limiting assembly to move through the limiting driving assembly to correspond to the movable end plate of the cell transfer carrying tool;
a limiting step: lowering the transfer apparatus such that the limiting assembly is connected with the movable end plate;
a supporting and positioning step: driving the clamp plate assembly to support the carrying assembly of the cell transfer carrying tool and to be positioned on the fixed end plate of the cell transfer carrying tool through the clamp plate driving assembly;
a separation step: lifting the transfer apparatus such that the cell transfer carrying tool is separated from the preheating fixture;
an adjusting step: driving the limiting assembly to push the movable end plate to move towards the fixed end plate through the limiting driving assembly, such that a posture of the carrying assembly corresponds to the oven; and
a transfer step: transferring the transfer apparatus to transfer the cell transfer carrying tool to the oven.

10. The transfer method according to claim 9, wherein:
the transfer apparatus further comprises an in-place sensor;
the in-place sensor is arranged on an end portion of the base body, and the in-place sensor is configured to sense the fixed end plate of the cell transfer carrying tool; and
in the limiting step, the fixed end plate of the cell transfer carrying tool is sensed through the in-place sensor to determine position information of the cell transfer carrying tool, and the limiting driving assembly controls a position of the limiting assembly to be connected with the movable end plate based on the position information.
